(19)

Europäisches Patentamt

European Patent Office

Office européen des brevets

(11) **EP 4 593 475 A1**

(12) **EUROPEAN PATENT APPLICATION**
published in accordance with Art. 153(4) EPC

(43) Date of publication:
**30.07.2025  Bulletin 2025/31**

(21) Application number: **24869702.1**

(22) Date of filing: **29.04.2024**

(51) International Patent Classification (IPC):
***H04W 52/36*** (2009.01)

(86) International application number:
**PCT/CN2024/090496**

(87) International publication number:
**WO 2025/066134 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023  CN 202311270872**

(71) Applicant: **ZTE Corporation**
**Shenzhen, Guangdong  518057 (CN)**

(72) Inventors:
• **XU, Hui**
**Shenzhen, Guangdong 518057 (CN)**
• **JI, Zhongwei**
**Shenzhen, Guangdong 518057 (CN)**
• **HUA, Xiaoquan**
**Shenzhen, Guangdong 518057 (CN)**
• **DING, Jianfeng**
**Shenzhen, Guangdong 518057 (CN)**
• **ZHONG, Congmin**
**Shenzhen, Guangdong 518057 (CN)**

(74) Representative: **Aipex B.V.**
**Vestdijk 51**
**5611 CA Eindhoven (NL)**

(54) **POWER HEADROOM INDICATION INFORMATION REPORTING METHOD, ELECTRONIC DEVICE, AND STORAGE MEDIUM**

(57)     Provided are a method for reporting power headroom, PH, indication information, an electronic device, and a storage medium. The method includes: receiving uplink waveform switching indication information for a bandwidth part, BWP; determining PH indication information of a post-switching uplink waveform according to a waveform parameter of a pre-switching uplink waveform, where the pre-switching uplink waveform is different from the post-switching uplink waveform; and reporting the PH indication information via the post-switching uplink waveform using a medium access control control element, MAC CE. In this manner, PH control indication information is reported when the waveform adopted by the terminal device changes, thereby achieving uplink power control of a terminal device by a network device and improving the utilization rate of uplink power domain resources.

Receive uplink waveform switching indication information for a BWP ⟩ 110

Determine PH indication information of a post-switching uplink waveform according to a waveform parameter of a pre-switching uplink waveform ⟩ 120

Report the PH indication information via the post-switching uplink waveform using a MAC CE ⟩ 130

**FIG. 2**

EP 4 593 475 A1

**Description**

TECHNICAL FIELD

The present application relates to the field of wireless communications and, in particular, to a method for reporting power headroom (PH) indication information, an electronic device, and a storage medium.

BACKGROUND

PH refers to the remaining power after a terminal device completes the current transmission. A PH report (PHR) process is used to report the uplink PH information of the terminal device (for example, the user equipment (UE)) to the base station (for example, the next-generation NodeB (gNB)). The gNB performs closed-loop power control according to the PH information, the measured channel state information (CSI), and the like, thereby effectively scheduling uplink resources for the UE.

If the PH is a positive value, the base station may schedule more resource blocks (RBs) for the terminal device during the next scheduling. If the PH is a negative value, the terminal device reports that the transmit power scheduled by the terminal has exceeded the maximum allowed transmit power. The maximum transmit power of the terminal device is affected by the maximum transmit power reduction of the terminal device. In other words, when the maximum transmit power reduction of the terminal device changes, the maximum transmit power also changes.

Currently, the uplink transmission of the New Radio (NR) access technology supports two waveforms, including a discrete Fourier transform spread orthogonal frequency-division multiplexing (DFT-s-OFDM) waveform and a cyclic prefix-orthogonal frequency-division multiplexing (CP-OFDM) waveform.

Since the CP-OFDM waveform has a higher peak-to-average power ratio (PAPR) than the DFT-s-OFDM waveform, to avoid signal distortion when the UE transmits the uplink signal using the maximum transmit power, the maximum transmit power of the CP-OFDM waveform should be reduced compared to that of the DFT-s-OFDM waveform. Dynamic switching between the CP-OFDM waveform and the DFT-s-OFDM waveform (for example, based on layer 1/layer 2 (L1/L2) signaling) is beneficial and should be supported in the NR. Due to the power reduction difference between the two waveforms, ideally, the gNB should know the expected UE power reduction change before performing the dynamic switching. It does not make sense to make a switching decision blindly. When the waveform adopted by the terminal device UE changes, how to report PH control indication information becomes an urgent problem to be solved.

SUMMARY

Embodiments of the present application aim to provide a method for reporting PH indication information, an electronic device, and a storage medium. An object is to achieve uplink power control of a terminal by a network device, improve the accuracy of switching decision applications, and improve the utilization rate of uplink power domain resources.

An embodiment of the present application provides a method for reporting PH indication information. The method includes the following:

Uplink waveform switching indication information for a bandwidth part (BWP) is received.

PH indication information of a post-switching uplink waveform is determined according to a waveform parameter of a pre-switching uplink waveform, where the pre-switching uplink waveform is different from the post-switching uplink waveform.

The PH indication information is reported via the post-switching uplink waveform using a medium access control control element (MAC CE).

An embodiment of the present application further provides a method for reporting PH indication information. The method includes the following:

An uplink signal is received, where a waveform of the uplink signal is a post-switching uplink waveform.

PH indication information of the post-switching uplink waveform carried in the uplink signal is determined.

PH of the post-switching uplink waveform is determined according to the PH indication information.

Uplink power control is performed on a terminal device according to the PH.

An embodiment of the present application further provides an electronic device. The electronic device includes at least one processor and a memory configured to store at least one program.

When executed by the at least one processor, the at least one program causes the at least one processor to perform the method for reporting PH indication information according to any embodiment of the present application.

An embodiment of the present application further provides a computer-readable storage medium storing at least one program which, when executed by at least one processor, causes the at least one processor to perform the method for reporting PH indication information according to any embodiment of the present application.

It is to be understood that the content described in this section is not intended to identify the key or important features of the embodiments of the present application, nor is it intended to limit the scope of the present application. Other features of the present application become easily understood through the following specification.

BRIEF DESCRIPTION OF DRAWINGS

To illustrate technical solutions in embodiments of the present application more clearly, the drawings used in the description of the embodiments are briefly described below. Apparently, the drawings described below are merely part of the embodiments of the present application, and those of ordinary skill in the art may obtain other drawings based on the drawings below on the premise that no creative work is done.

FIG. 1 is a schematic view of a network architecture of a communication system adopted in an embodiment of the present application.

FIG. 2 is a flowchart of a method for reporting PH indication information according to an embodiment of the present application.

FIG. 3 is a flowchart of another method for reporting PH indication information according to an embodiment of the present application.

FIG. 4 is an example flowchart of terminal reporting according to an embodiment of the present application.

FIG. 5 is an example diagram of PH indication information reporting according to an embodiment of the present application.

FIG. 6 shows an example of MAC CE reporting according to an embodiment of the present application.

FIG. 7 is a timing example diagram of waveform switching according to an embodiment of the present application.

FIG. 8 is a diagram illustrating the structure of an apparatus for reporting PH indication information according to an embodiment of the present application.

FIG. 9 is a diagram illustrating the structure of another apparatus for reporting PH indication information according to an embodiment of the present application.

FIG. 10 is a diagram illustrating the structure of an electronic device according to an embodiment of the present application.

FIG. 11 is a diagram illustrating the structure of a communication apparatus according to an embodiment of the present application.

FIG. 12 is a diagram illustrating the structure of another communication apparatus according to an embodiment of the present application.

DETAILED DESCRIPTION

It is to be understood that the embodiments described herein are intended to explain the present application, not to limit the present application.
In the subsequent description, a word such as "module", "component", or "unit" for representing an element is used merely to facilitate the description of the present application and has no particular meaning in itself. Therefore, "module", "component", and "unit" may be used in a mixed manner.

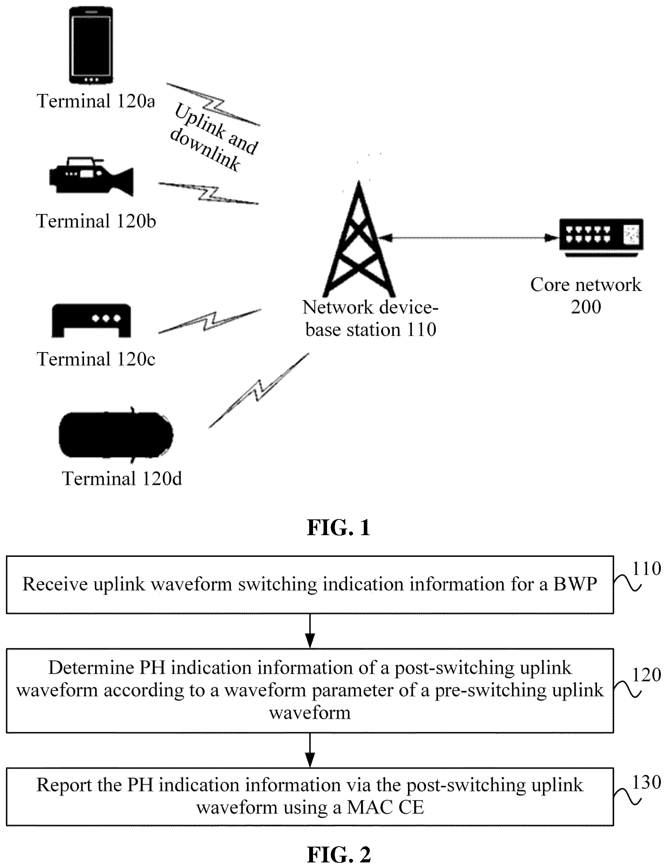

FIG. 1 is a schematic view of a network architecture of a communication system adopted in an embodiment of the present application. Referring to FIG. 1, the communication system includes a radio access network (RAN) 100 and a core network 200. The RAN 100 may include at least one network device (such as 110 in FIG. 1) and may further include at least one terminal device (such as at least one of 120a to 120d in FIG. 1). The terminal device is connected to the access network device in a wireless manner, and the access network device is connected to the core network in a wireless or wired manner. The terminal devices may be connected to each other in a wired or wireless manner, and the network devices may be connected to each other in a wired or wireless manner. FIG. 1 is merely a schematic view. The communication system may further include other network devices, such as a wireless relay device and a wireless backhaul device which are not shown in FIG. 1.

The network device is a network-side device with a wireless transceiver function. The network device may be a device in the RAN that provides a wireless communication function for the terminal device and is called an RAN device. For example, the network device may be a base station, an evolved NodeB (eNodeB), a transmission reception point (TRP), a gNB in the 5th generation (5G) mobile communication system, a gNB in the 6th generation (6G) mobile communication system, a base station in a future mobile communication system, an access node in a Wireless Fidelity (Wi-Fi) system, or the like; or the network device may be a module or unit that implements some functions of the base station, for example, a central unit (CU) or a distributed unit (DU). The CU here implements the functions of the radio resource control (RRC) protocol and the Packet Data Convergence Protocol (PDCP) of the base station and may also implement the function of the Service Data Adaptation Protocol (SDAP). The DU implements the functions of the radio link control layer and the medium access control (MAC) layer of the base station and may also implement the functions of some or all physical layers. For the specific description of the preceding protocol layers, reference may be made to the relevant technical specifications of the 3rd Generation Partnership Project (3GPP). The network device may be a macro base station, a micro base station, an indoor station, a relay node, a donor node, or the like.

The specific technology and the specific device form used by the network device are not limited in the embodiments of the present application. For ease of description, the case where the base station is used as the network device is used as an example for the description below.

The terminal device is a user-side device with a wireless transceiver function. The terminal device may also be referred to as a user equipment (UE), a mobile station, a mobile terminal, or the like. The terminal device may be widely used in various scenarios, such as Device-to-Device (D2D), vehicle-to-everything (V2X) communication, machine-type communication (MTC), Internet of things (IoT), virtual reality, augmented reality, industrial control, autonomous driving, telemedicine, a smart grid, smart furniture, a smart office, a smart wearable scenario, smart transportation, a smart city, and the like. The terminal device may be a mobile phone, a tablet computer, a computer with a wireless transceiver function, a wearable device, a vehicle, a drone, a helicopter, an airplane, a ship, a robot, a mechanical arm, a smart home device, or the like. The specific technology and the specific device form used by the terminal device are not limited in the embodiments of the present application. The case where the terminal is the terminal device is used as an example for the description in the embodiments of the present application. The base station and the terminal may be fixed or movable. The base station and the terminal may be deployed on land, including indoors or outdoors, and may be handheld or vehicle-mounted. The base station and the terminal may be deployed on the water and may also be deployed on an aircraft, a balloon, and an artificial satellite in the air. Application scenarios of the base station and the terminal are not limited in the embodiments of the present application.

The roles of the base station and the terminal may be relative, so the base station and the terminal may be collectively referred to as communication apparatuses. 110 in FIG. 1 may be referred to as a communication apparatus with a base station function, and 120a to 120d in FIG. 1 may be referred to as communication apparatuses with terminal functions. The communication between the base station and the terminal, between the base stations, and between the terminals may be performed through the licensed spectrum, through the unlicensed spectrum, or through both the licensed spectrum and the unlicensed spectrum and may be performed through the spectrum below 6 gigahertz (GHz), through the spectrum above 6 GHz, or through both the spectrum below 6 GHz and the spectrum above 6 GHz. The spectrum resources used for wireless communication are not limited in the embodiments of the present application.

In the embodiments of the present application, the function of the base station may be implemented by a module (such as a chip) in the base station or may be implemented by a control subsystem with a base station function. The control subsystem with the base station function here may be a control center in the preceding application scenario such as a smart grid, industrial control, smart transportation, or a smart city. The function of the terminal may be implemented by a module (such as a chip or a modem) in the terminal or may be implemented by an apparatus with a terminal function.

In the embodiments of the present application, the uplink transmission of NR supports two waveforms, including the DFT-s-OFDM waveform and the CP-OFDM waveform. The CP-OFDM waveform is applied to non-power-limited situations with more transmission capabilities, while the DFT-s-OFDM waveform is used in power-limited situations since the DFT-s-OFDM waveform has a lower peak-to-average ratio. However, the DFT-s-OFDM waveform supports only a single layer. Due to the difference in peak-to-average ratio, the two waveforms may have different power reduction, which means that the maximum transmit power $P_{c,max}$ of the UE corresponding to the DFT-s-OFDM waveform may be different from the maximum transmit power $P_{c,max}$ of the UE corresponding to the CP-OFDM waveform. To maintain the efficiency of a power amplifier (PA), it is better to introduce different uplink power control mechanisms for the DFT-s-OFDM waveform and the CP-OFDM waveform, respectively since a significant difference in cubic metric (CM) exists between the two transmission waveforms. The UE may be configured with multiple BWPs, but signals are dynamically sent to the activated BWPs via L1 or L2 signaling. Furthermore, the case with a single active BWP is prioritized. Dynamic BWP adaptation may include bandwidth adaptation or BWP "hopping". The configured multiple BWPs may use the same or different numerologies. Different numerologies may require separate uplink (UL) power control parameter settings, which means that the UL power control parameters may be configured according to the BWPs.

The PHR process is used to provide the serving gNB with information about the difference between the nominal UE maximum transmit power and the power of the uplink shared channel (UL-SCH) transmission or Sounding Reference Signal (SRS) transmission in the channel for each activated serving cell, as well as information about the difference between the nominal values.

Three different types of PHRs are defined in NR: Type 1, Type 2, and Type 3. In case of carrier aggregation or dual connectivity, multiple PHRs may be included in a single message (MAC CE). The Type 1 PHR reflects the PH assuming only Physical Uplink Shared Channel (PUSCH) is transmitted on the carrier and is valid for a carrier component. The Type 2 PHR is similar to Type 1, but it is assumed that both the PUSCH report and the Physical Uplink Control Channel (PUCCH) report are performed simultaneously. The Type 3 PHR is used to process SRS switching, that is, the terminal device is configured to not perform SRS transmission on an uplink carrier of the PUSCH.

According to the timing of obtaining uplink scheduling, the UE determines whether the PH of a certain activated cell is calculated based on the actual transmission or reference format. The PH calculated based on the actual transmission is referred to as real PH, and the PH calculated based on the reference format is referred to as virtual PH. From the time when the PHR is triggered until resources for PHR transmission are allocated, if the transmission of the PUSCH and SRS occurs, the terminal reports the real PHR, or if no transmission of the PUSCH and SRS occurs, the terminal reports the virtual PHR. In addition, to ensure the radio frequency (RF) quality transmitted by the UE under different modulation modes and at different frequency domain positions and to satisfy the requirements for the specific absorption rate (SAR) of the UE in certain scenarios, the maximum power reduction (MPR) and the additional maximum power reduction (A-MPR) are defined in the protocol to guide the UE to perform appropriate power reduction.

Currently, when the terminal satisfies a trigger condition for the PHR, the terminal may send the PH to the base station. If the PH is a positive value, the base station may schedule more RBs for the terminal device during the next scheduling. If the PH is a negative value, the terminal reports that the transmit power scheduled by the terminal has exceeded the maximum allowed transmit power. The network device may adjust the uplink transmit power of the terminal according to the PHR. The PHR process of the PUSCH transmitted by the terminal is used as an example for the description below.

If the terminal calculates the first type of PHR according to the actually transmitted PUSCH, the PHR may be determined through the formula (1) below.

$$PH_{\text{type1},b,f,c}(i,j,q_d,l) = P_{CMAX,f,c}(i) - \{P_{0_{\text{PUSCH}},b,f,c}(j) + 10\log_{10}\left(2^{\mu} \cdot \right.$$

$$\left. M_{RB,B,F,C}^{PUSCH}(i)\right) + \alpha_{b,f,c}(j) \cdot PL_{b,f,c}(q_d) + \Delta_{TF,b,f,c}(i) + f_{b,f,c}(i,l)\} \tag{1}$$

$P_{0_{\text{PUSCH}\,b,f,c}}(j)$ and $\alpha_{b,f,c}(j)$ may be collectively referred to as the target power values. $j \in \{0, 1,..., J - 1\}$. When the base station is configured with multiple parameter sets indicating the values of $P_0$ and $\alpha$, the terminal determines the parameter set number used for the current PUSCH transmission according to the current transmission mode, such as initial access transmission, data scheduling transmission based on downlink control information (DCI) or data scheduling transmission based on RRC, and the value indicated by the Sounding Reference Signal Indication (SRI) field, thereby determining the values of $P_0$ and $\alpha$. Each parameter set includes an identifier (ID) of the set and the values of $P_0$ and $\alpha$.

$M_{RB,b,f,c}^{PUSCH}(i)$ denotes the number of RBs occupied by the PUSCH at the PUSCH transmission opportunity on the uplink activated BWP b of the carrier f of the serving cell c.

$\mu$ denotes the value corresponding to the subcarrier spacing (SCS) configuration.

$PL_{b,f,c}(q_d)$ denotes the downlink path loss estimation value calculated by the terminal according to the reference signal index value ($q_d$) and is used as the path loss compensation value for uplink power control.

$\Delta_{TF,b,f,c}(i)$ is determined according to the type of information carried by the PUSCH, such as the UL-SCH or the CSI, the position and quantity of occupied physical resources, and other factors.

$f_{b,f,c}(i,l)$ denotes the PUSCH power control adjustment state at the PUSCH transmission opportunity i on the BWP b of the carrier f of the serving cell c. The information is indicated by the base station through the DCI so that the base station can adjust the PUSCH transmit power in real time according to the current transmission channel state and the scheduling situation.

$P_{CMAX,f,c}(i)$ denotes the maximum transmit power configured at the PUSCH transmission opportunity i on the carrier f of the serving cell c. The maximum transmit power is related to factors such as the terminal transmission capability and the frequency band where the PUSCH is located.

The value of the maximum transmit power $P_{CMAX,f,c}(i)$ satisfies the formula below.

$$P_{CMAX\_L,f,c} \ \leq \ P_{CMAX,f,c} \leq \ P_{CMAX\_H,f,c} \tag{2}$$

$P_{CMAX\_L,f,c}$ satisfies the formula (3) below.

$P_{CMAX\_L,f,c}$ = MIN {$P_{EMAX,c}$ - $\Delta T_{C,c}$, ($P_{PowerClass}$ - $\Delta P_{PowerClass}$) - MAX(MAX(MPR$_c$, A-MPR$_c$) + $\Delta T_{IB,c}$ + $\Delta T_{C,c}$ + $\Delta T_{RxSRS}$, P-MPR$_c$)} (3) $\tag{3}$

$P_{CMAX\_H,f,c}$ satisfies the formula (4) below.

$$P_{CMAX\_H,f,c} = \text{MIN}\ \{P_{EMAX,c},\ P_{PowerClass} - \Delta P_{PowerClass}\} \tag{4}$$

$P_{EMAX,c}$ in the preceding formula (3) and formula (4) denotes the value of the information element p-MAX in the serving cell.

$P_{PowerClass}$ denotes the maximum terminal power of the terminal at one of the different power classes. For a terminal at an enabling power class 2, $\Delta P_{PowerClass}$ = 3dB, or for a terminal at another enabling power class, $\Delta P_{PowerClass}$ = 0.

In the preceding formula (3), $\Delta T_{IB,c}$ denotes the additional tolerance for the serving cell c, and $\Delta T_{C,c}$ denotes a predefined value which is 1.5 dB or 0. MPRc in the formula (3) denotes the MPR for the serving cell c, and A-MPRc denotes the additional maximum power reduction. The values of the MPR of the two waveforms at power class 3 and power class 2 are shown in Table 1 and Table 2, respectively.

Table 1: MPR at power class 3

| Modulation | | MPR (dB) | | |
| --- | --- | --- | --- | --- |
| | | **Edge RB allocations** | **Outer RB allocations** | **Inner RB allocations** |
| DFT-s-O FDM | P$_i$/2 BPSK | $\leq 3.5$[1] | $\leq 1.2$[1] | $\leq 0.2$[1] |
| | | $\leq 0.5$[2] | $\leq 0.5$[2] | 0[2] |
| | QPSK | $\leq 1$ | | 0 |
| | 16 QAM | $\leq 2$ | | $\leq 1$ |
| | 64 QAM | $\leq 2.5$ | | |
| | 256 QAM | $\leq 4.5$ | | |
| CP-OFD M | QPSK | $\leq 3$ | | $\leq 1.5$ |
| | 16 QAM | $\leq 3$ | | $\leq 2$ |
| | 64 QAM | $\leq 3.5$ | | |
| | 256 QAM | $\leq 6.5$ | | |

Table 2: MPR at power class 2

| Modulation | | MPR (dB) | | |
| --- | --- | --- | --- | --- |
| | | **Edge RB allocations** | **Outer RB allocations** | **Inner RB allocations** |
| DFT-s-OF DM | P$_i$/2 BPSK | $\leq 3.5$ | $\leq 0.5$ | 0 |
| | QPSK | $\leq 3.5$ | $\leq 1$ | 0 |
| | 16 QAM | $\leq 3.5$ | $\leq 2$ | $\leq 1$ |
| | 64 QAM | $\leq 3.5$ | $\leq 2.5$ | |
| | 256 QAM | $\leq 4.5$ | | |

(continued)

| Modulation | | MPR (dB) | | |
|---|---|---|---|---|
| | | Edge RB allocations | Outer RB allocations | Inner RB allocations |
| CP-OFDM | QPSK | $\leq 3.5$ | $\leq 3$ | $\leq 1.5$ |
| | 16 QAM | $\leq 3.5$ | $\leq 3$ | $\leq 2$ |
| | 64 QAM | $\leq 3.5$ | | |
| | 256 QAM | $\leq 6.5$ | | |

In the preceding formula, whether $\Delta T_{RxSRS}$ is applied depends on the configuration of an SRS port and an antenna. P-MPRc denotes the maximum power reduction set in accordance with regulatory requirements.

It can be seen from the preceding formula (2) that the value of $P_{CMAX,f,c}$ of the terminal is related to the MPR, and the MPR is related to the uplink transmission waveform adopted by the terminal. Therefore, the uplink transmission waveform adopted by the terminal affects the value of $P_{CMAX,f,c}$ and thus affects the power indication information and PH reported by the terminal. In other words, when the waveform adopted by the terminal device changes, the maximum transmit power reduction of the terminal device changes, so the maximum transmit power also changes, resulting in changes in the maximum transmit power and PH of the terminal device.

Assuming that the waveform switching command sent by the network is used as the trigger condition for the PH indication information, a time difference exists between the time when the terminal receives the waveform switching command and the time when the terminal actually performs waveform switching. After receiving the waveform switching command, the terminal starts to calculate the PH indication information and the waveform margin. At this time, the waveform has not yet switched, that is, the terminal uses a first waveform (which is also referred to as a pre-switching waveform) to calculate the PH indication information and the PH and uses the second waveform (which is also referred to as a post-switching waveform) to send the PH indication information and the PH. Then, the value of $P_{CMAX,f,c}$ adopted by the PH indication information and the PH reported by the terminal may not be aligned with the value of $P_{CMAX,f,c}$ based on which the base station receives the PH indication information and the PH. Therefore, the PH reported by the terminal may have errors, for example, a larger difference exists between the PH reported by the terminal and the PH required by the base station, causing the PH reported by the terminal to be unavailable for the base station to perform uplink power control on the terminal.

In view of this, the embodiment of the present application provides a method for reporting PH indication information, which is used for the following: when waveform switching occurs in the terminal, the terminal reports the power indication information and the PH and sends the power indication information and the PH information to the base station so that the base station can perform uplink power control on the terminal.

FIG. 2 is a flowchart of a method for reporting PH indication information according to an embodiment of the present application. The present application may be applicable to the case of reporting the PH indication information. The method may be performed by an apparatus for reporting PH indication information. The apparatus may be implemented by software and/or hardware and is generally integrated in the terminal device. Referring to FIG. 2, the method provided in the embodiment of the present application specifically includes the following:

In 110, uplink waveform switching indication information for a BWP is received.

The uplink waveform switching indication information may be information to instruct the terminal device to perform waveform switching. After receiving the uplink waveform switching indication information, the terminal device may perform waveform switching, and the waveform may switch from the first waveform to the second waveform. It is to be understood that the first waveform and the second waveform may be different types of waveforms.

In the embodiment of the present application, the uplink waveform switching indication information for the BWP may be received, and when it is determined that the uplink waveform switching indication information is received, the first waveform currently used in the uplink may be switched to the second waveform.

In 120, PH indication information of a post-switching uplink waveform is determined according to a waveform parameter of a pre-switching uplink waveform, where the pre-switching uplink waveform is different from the post-switching uplink waveform.

In the embodiment of the present application, the terminal device may determine the PH indication of the post-switching uplink waveform according to the pre-switching uplink waveform. The PH indication may include the maximum transmit power, which may be the maximum transmit power of the post-switching uplink waveform.

In 130, the PH indication information is reported via the post-switching uplink waveform using a MAC CE.

Specifically, the terminal device may transmit the determined PH indication information via the post-switching uplink waveform using the MAC CE.

In the embodiment of the present application, the uplink waveform switching indication information corresponding to the BWP is received, the PH indication information is determined according to the uplink waveform switching indication information, and the PH indication information is reported via the MAC CE so that the maximum transmit power of the PH indication information sent by the terminal device is aligned with the maximum transmit power adopted by the base station, thereby facilitating the following: the base station performs uplink power control on the terminal device according to the PH indication information, and the utilization rate of uplink power domain resources is improved.

Further, based on the preceding embodiment of the present application, if the terminal device does not transmit uplink data during the period from receiving the uplink waveform switching indication information to the actual occurrence of the waveform switching, the terminal device does not report the PH indication information.

Based on the preceding embodiment of the present application, the PH indication information includes the maximum transmit power, and the maximum transmit power includes the maximum transmit power of the post-switching uplink waveform.

In the embodiment of the present application, the determined PH indication information may include the maximum transmit power, and the maximum transmit power may be the maximum transmit power of the post-switching uplink waveform after the terminal device switches the waveform. It is to be understood that the maximum transmit power may be the upper limit of the transmit power that the terminal device may adopt when the terminal device transmits a piece of information, and the maximum transmit power of the terminal device may be determined by the terminal device or configured by the network device. Further, if the pre-switching uplink waveform does not support one or more parameters of the post-switching uplink waveform, the mobile terminal does not report the PH indication information of the post-switching uplink waveform.

In some embodiments of the present application, the maximum transmit power is determined according to the parameter of the pre-switching uplink waveform, the parameter includes at least the MPR, and the PH indication information further includes PH of the pre-switching uplink waveform.

In the embodiment of the present application, the terminal device may determine the maximum transmit power of the post-switching uplink waveform according to the MPR corresponding to the pre-switching uplink waveform, and the maximum transmit power may be used as the PH indication information. When receiving the uplink waveform switching indication information, the terminal device may also determine the PH of the pre-switching uplink waveform as the PH indication information.

In some embodiments of the present application, the method further includes determining the PH according to the pre-switching uplink waveform, where the PH refers to the remaining power after the terminal device completes the current transmission.

Specifically, the terminal device may determine the PH of the pre-switching uplink waveform according to the pre-switching uplink waveform, and the PH may be the remaining power after the terminal device completes the current transmission.

In the embodiment of the present application, when waveform switching occurs, the terminal may determine the maximum transmit power and the PH as the PH indication information according to the pre-switching uplink waveform and report the PH indication information. In this manner, the maximum transmit power sent by the terminal is the maximum transmit power corresponding to the post-switching uplink waveform and may be aligned with the maximum transmit power adopted by the base station.

In the embodiment of the present application, the pre-switching uplink waveform includes a DFT-s-OFDM waveform, and the post-switching uplink waveform includes a CP-OFDM waveform; or the pre-switching uplink waveform includes the CP-OFDM waveform, and the post-switching uplink waveform includes the DFT-s-OFDM waveform.

Specifically, the pre-switching uplink waveform may be different from the post-switching uplink waveform. The pre-switching uplink waveform includes the DFT-s-OFDM waveform, and the post-switching uplink waveform includes the CP-OFDM waveform; or the pre-switching uplink waveform includes the CP-OFDM waveform, and the post-switching uplink waveform includes the DFT-s-OFDM waveform. The DFT-s-OFDM waveform is one of the waveforms supported by the uplink transmission of the NR system. The DFT-s-OFDM waveform supports single-layer transmission, has good demodulation performance at low modulation orders, is suitable for uplink transmission by the cell edge user, and can improve the uplink coverage. The CP-OFDM waveform is one of the waveforms supported by the uplink transmission of the NR system. The CP-OFDM waveform supports multi-layer transmission, can increase the uplink capacity, and is suitable for uplink transmission by the cell center user.

Based on the preceding embodiment of the present application, the PH of the pre-switching uplink waveform is reported periodically and triggered according to a predefined event.

In the embodiment of the present application, the PH of the pre-switching uplink waveform may be reported periodically, and the PH of the pre-switching uplink waveform is reported when an event is acquired. The event may be predefined and generated, and the event may include at least one of the following:

1. The phr-ProhibitTimer times out or has timed out, and if the path loss of at least one activated cell for any MAC entity changes by more than the phr-Tx-PowerFactorChange compared to the path loss of the activated cell during the previous PHR transmission of the MAC entity.

2. The phr-PeriodicTimer times out.

3. The upper layer is configured or reconfigured with the PHR function.

4. Activation of the Secondary Cell (SCell) in the uplink is configured in any MAC entity.

5. Addition or change of the Primary Secondary Cell (PScell) occurs.

Based on the preceding embodiment of the present application, the maximum transmit power $P_{CMAX,f,c(i)}$ is the maximum transmit power configured at a PUSCH transmission opportunity i on a carrier f of a serving cell c, and a value of the maximum transmit power $P_{CMAX,f,c(i)}$ satisfies the following formula:

$$P_{CMAX\_L,f,c} \leq P_{CMAX,f,c} \leq P_{CMAX\_H,f,c}.$$

$P_{CMAX\_L,f,c}$ satisfies the formula below.

$$P_{CMAX\_L,f,c} = MIN \{P_{EMAX,c} - \Delta T_{C,c}, (P_{PowerClass} - \Delta P_{PowerClass}) - MAX(MAX(MPRc, A\text{-}MPRc) + \Delta T_{IB,c} + \Delta T_{C,c} + \Delta T_{RxSRS}, P\text{-}MPRc)\}).$$

$P_{CMAX\_H,f,c}$ satisfies the formula below.

$$P_{CMAX\_H,f,c} = MIN \{P_{EMAX,c}, P_{PowerClass} - \Delta P_{PowerClass}\}.$$

$P_{EMAX,c}$ denotes a value of an information element p-MAX in RRC signaling in the serving cell; $P_{PowerClass}$ denotes the maximum terminal power of a terminal at one of the different power classes; for a terminal at an enabling power class 2, $\Delta P_{PowerClass}$ = 3dB, or for a terminal at another power class, $\Delta P_{PowerClass}$ = 0; $\Delta T_{IB,c}$ denotes the additional tolerance for the serving cell c, and $\Delta T_{C,c}$ denotes a predefined value which is 1.5 dB or 0; MPRc denotes the MPR for the serving cell c, and A-MPRc denotes the additional maximum power reduction; $\Delta T_{RxSRS}$ denotes an application indication related to the configuration of an uplink SRS port and an antenna; and P-MPRc denotes the maximum power reduction set in accordance with regulatory requirements.

In some embodiments of the present application, the uplink waveform switching indication information is carried in at least one of the following: the DCI or the MAC CE.

In the embodiment of the present application, the terminal device may acquire the uplink waveform switching indication information for the BWP through the DCI or the MAC CE.

In the embodiment of the present application, the method further includes receiving first DCI or the MAC CE, where the first DCI or the MAC CE includes the uplink waveform switching indication information.

In the embodiment of the present application, the network device may send the first DCI or the MAC CE to the terminal device, and the first DCI or the MAC CE may carry the uplink waveform switching indication information, thereby instructing the terminal device to perform uplink waveform switching.

Based on the preceding embodiment of the present application, the method further includes receiving first RRC signaling, where the first RRC signaling indicates whether the DCI or the MAC CE includes the uplink waveform switching indication information, and when the DCI or the MAC CE includes the uplink waveform switching indication information, an operation is performed according to the uplink waveform switching indication information.

In the embodiment of the present application, the terminal device may also receive the first RRC signaling, and the first RRC signaling may indicate whether information such as the DCI or the MAC CE includes the uplink waveform switching indication information. When the first RRC signaling indicates that the DCI or the MAC CE includes uplink waveform switching indication information, the terminal device may perform waveform switching. When the first RRC signaling indicates that the DCI or the MAC CE does not have the uplink waveform switching indication information, the terminal device does not perform uplink waveform switching when receiving the DCI or the MAC CE that does not have the uplink waveform switching indication information.

For example, the network device sends the first RRC signaling to the terminal device, which is used to configure the DCI or the MAC CE such that the DCI or the MAC CE includes whether to enable the uplink waveform switching indication information. If the first RRC signaling includes waveform enabling information, the corresponding uplink configuration DCI/MAC CE includes indication information that the waveform can be dynamically switched, for example, the corresponding information bit is 1. If the first RRC signaling includes waveform disabling information, the corresponding uplink configuration DCI/MAC CE includes indication information that the waveform cannot be dynamically switched, for example, the corresponding information bit is 0.

In some embodiments of the present application, the method further includes receiving second RRC signaling, where the second RRC signaling instructs the terminal device to report PH indication information of the post-switching uplink waveform.

In the embodiment of the present application, the terminal device may receive the second RRC signaling, where the second RRC signaling instructs the terminal device to report the PH indication information of the post-switching uplink waveform. The PH indication information may include the maximum transmit power of the post-switching uplink waveform and the PH of the pre-switching uplink waveform.

In some embodiments of the present application, the method further includes sending capability information, where the capability information includes at least an indication that the DCI is supported to include indication information of an uplink waveform switching command or an indication that the MAC CE is supported to include the indication information of the uplink waveform switching command.

In the embodiment of the present application, the terminal device may send the capability information, where the capability information may include the indication that the terminal device supports the DCI to include the indication information of the uplink waveform switching command or supports the MAC CE to include the indication information of the uplink waveform switching command. Through the capability information, the network device may determine whether the terminal device supports the DCI or the MAC CE to include the uplink waveform switching indication information.

In some embodiments of the present application, the method further includes at least one of the following:
If the pre-switching uplink waveform includes no uplink data transmission, the PH indication information is not reported.

If the parameter of the pre-switching uplink waveform is not suitable for the PH indication information of the post-switching uplink waveform, the PH indication information is not reported.

In the embodiment of the present application, if the pre-switching uplink waveform of the terminal device includes no uplink data transmission, the PH indication information is not reported. For example, if the terminal device does not transmit uplink data during the period from receiving the waveform switching command to the actual occurrence of the waveform switching, the terminal does not report the PH indication information. If the parameter of the pre-switching uplink waveform of the terminal device is not suitable for the PH indication information of the post-switching uplink waveform, the PH indication information is not reported. For example, the terminal device uses the waveform parameter of the pre-switching uplink waveform to calculate the maximum transmit power of the post-switching uplink waveform, and if the post-switching uplink waveform does not support one or more parameters of the pre-switching uplink waveform, the terminal device does not report the PH indication information.

In some embodiments of the present application, an indication manner of the maximum transmit power of the PH indication information includes at least one of the following: a power value indication; an indication of a difference from an actual power value; an index indication of power or a power difference; or an indication by the MAC CE via a logical channel identifier (LCID) corresponding to the PH indication information.

In the embodiment of the present application, the maximum transmit power in the PH indication information is indicated in one or more of the following manners: the power value indication; the indication of a difference from an actual power value; the index indication of power or a power difference; or the indication by the MAC CE via the LCID corresponding to the PH indication information.

For example, the maximum transmit power in the power indication information is indicated by a specific power value, such as 20 dBm, or by the difference from the actual power value, such as 2 dB, indicating that the post-switching maximum power is 2dB greater than the actual maximum transmit power. During reporting, the UE adopts the corresponding index indication. For example, the specific power value may be a 6-bit index indicator, or the difference from the actual power value may be a 2 to 3 bit index indicator.

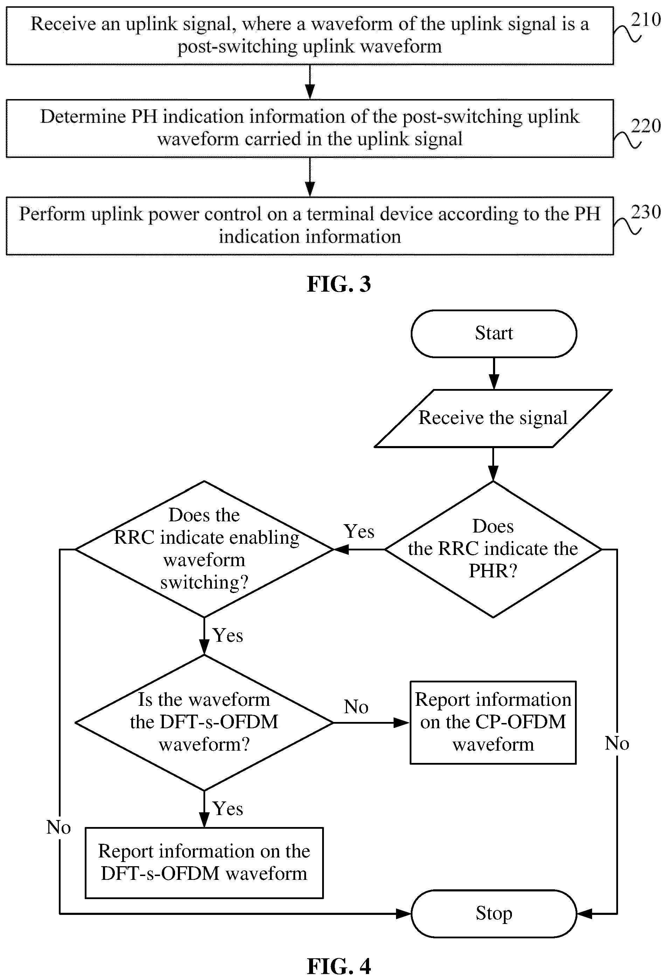

FIG. 3 is a flowchart of another method for reporting PH indication information according to an embodiment of the present application. The present application may be applicable to the case of reporting the PH indication information. The method may be performed by an apparatus for reporting PH indication information. The apparatus may be implemented by software and/or hardware and is generally integrated in the network device. Referring to FIG. 3, the method provided in the embodiment of the present application specifically includes the following:
In 210, an uplink signal is received, where a waveform of the uplink signal is a post-switching uplink waveform.

In the embodiment of the present application, the network device may receive the uplink signal reported by the terminal device, and the waveform of the uplink signal is the post-switching uplink waveform after the terminal device switches the waveform.

In 220, PH indication information of the post-switching uplink waveform carried in the uplink signal is determined.

Specifically, the uplink signal may carry the PH indication information of the post-switching uplink waveform, the network device may extract the PH indication information, and the PH indication information may be used to determine the post-switching PH of the post-switching uplink waveform.

In 230, uplink power control is performed on a terminal device according to the PH indication information.

Specifically, the uplink power of the terminal device may be controlled according to the PH indication information of the post-switching uplink waveform so that the uplink power of the terminal device does not exceed the PH of the post-switching uplink waveform, thereby improving the utilization rate of uplink power domain resources. For example, the PH of the post-switching uplink waveform of the terminal device may be determined according to the PH indication information, and uplink power control may be performed according to the PH.

In some embodiments of the present application, the PH indication information indicates the maximum transmit power of the post-switching uplink waveform, and the PH indication information further includes PH of a pre-switching uplink waveform.

In the embodiment of the present application, the PH indication information received by the network device may include the maximum transmit power of the post-switching uplink waveform and the PH of the pre-switching uplink waveform.

In some embodiments of the present application, the maximum transmit power is determined according to the maximum power reduction of the pre-switching uplink waveform.

In the embodiment of the present application, the maximum transmit power is determined by the terminal device according to the maximum power reduction of the pre-switching uplink waveform.

In some other embodiments of the present application, the PH is determined according to the maximum transmit power of the pre-switching uplink waveform.

Specifically, the PH of the pre-switching uplink waveform may be determined according to the maximum transmit power of the pre-switching uplink waveform.

In some embodiments of the present application, the method further includes sending first RRC signaling, where the first RRC signaling indicates whether DCI or a MAC CE includes uplink waveform switching indication information.

In the embodiment of the present application, the network device may send the first RRC signaling to the terminal device, and the first RRC signaling may indicate whether the DCI or the MAC CE includes the uplink waveform switching indication information. For example, if the first RRC signaling includes waveform enabling information, the corresponding uplink configuration DCI/MAC CE includes indication information that the waveform can be dynamically switched, for example, the corresponding information bit is 1. If the first RRC signaling includes waveform disabling information, the corresponding uplink configuration DCI/MAC CE includes indication information that the waveform cannot be dynamically switched, for example, the corresponding information bit is 0.

In some embodiments of the present application, the method further includes receiving capability information, where the capability information includes at least an indication that the terminal device supports DCI to include uplink waveform switching indication information or an indication that the terminal device supports the MAC CE to include the uplink waveform switching indication information.

In the embodiment of the present application, the network device may receive the capability information transmitted by the terminal device, and the capability information may indicate that the terminal device supports the DCI or the MAC CE to include the uplink waveform switching indication information.

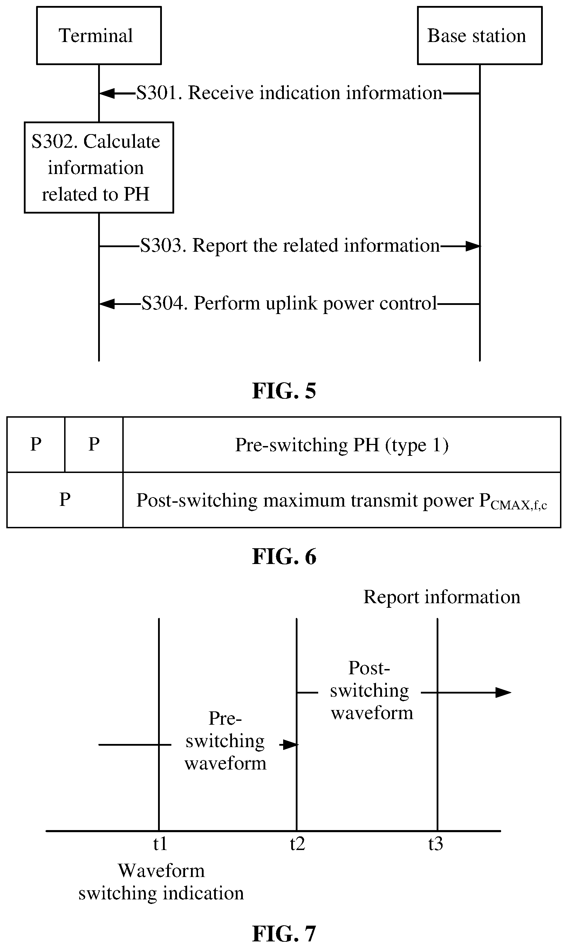

The embodiment of the present application provides a method for reporting PH. As shown in FIG. 4, the method is used for the following: when waveform switching occurs in the terminal, the terminal reports the power indication information and the PH and sends the power indication information and the PH information to the base station through the post-switching waveform so that the base station can perform uplink power control on the terminal. Referring to FIG. 5, the method for reporting PH indication information provided in the embodiment of the present application includes the following:

In S301, the terminal receives waveform switching indication information and PHR indication information.

The waveform switching indication information includes the first RRC signaling and the first DCI signaling, where the first RRC signaling indicates whether a waveform switching indicator field exists in the first DCI. If the waveform switching indicator field exists in the first DCI, the terminal performs an operation according to the waveform switching indicator field information in the DCI. If the preceding indicator field indicates that the waveform switching exists, the terminal performs a waveform switching operation. The PHR indication information includes the second RRC signaling, and the second RRC signaling indicates whether the terminal reports the PH indication information. If the second RRC signaling indicates that the terminal needs to report the PH indication information, when the terminal receives a waveform switching command in the DCI, the terminal calculates the corresponding PH indication information and reports the PH indication information through the post-switching waveform. The PH indication information includes at least the maximum transmit power of the post-switching waveform, the PH indication information is calculated according to the pre-switching waveform parameter, and the MPR difference between the pre-switching waveform and the post-switching waveform is considered.

In the embodiment of the present application, the pre-switching uplink waveform is different from the post-switching uplink waveform. For example, the pre-switching uplink waveform may be the DFT-s-OFDM waveform, and the post-switching uplink waveform may be the CP-OFDM waveform; conversely, the pre-switching uplink waveform may be the CP-OFDM waveform, and the post-switching uplink waveform may be the DFT-s-OFDM waveform. In an example, the first information may indicate dynamic switching of the uplink waveform. For example, the DCI may include a 1-bit indicator field indicating the switching of the uplink waveform. When the indicator field is 1, the uplink waveform is dynamically switched; and when the indicator field is 0, the uplink waveform remains unchanged. In addition, the indicator field may also directly indicate the first uplink waveform. For example, when the value of the indicator field is 1, the terminal may use the CP-OFDM waveform to send the uplink signal; and when the value of the indicator field of the uplink waveform in the DCI is 0, the terminal may use the DFT-s-OFDM waveform to send the uplink signal. Conversely, when the value of the indicator field of the uplink waveform in the DCI is 0, the terminal may use the CP-OFDM waveform to send the uplink signal; and when the value of the indicator field of the uplink waveform in the DCI is 1, the terminal may use the DFT-s-OFDM waveform to send the uplink signal.

In an example embodiment, the uplink waveform switching may be indicated by the DCI. For example, when the first information is the DCI, the first information may be the uplink grant (UL grant) signaling, and the format of the first information may be DCI format 0_0, DCI format 0_1, DCI format 0_2, or the like. For another example, when the first information is the DCI, the first information may be the group-common DCI. In another possible case, the first information may be indicated by the MAC CE.

Based on the preceding embodiment of the present application, the first information further includes the first RRC signaling, and the first RRC signaling is used to instruct whether the waveform switching indication information exits in the DCI.

In S302, the terminal determines the PH and indication information according to the first uplink waveform.

Specifically, when the DCI received by the terminal includes the waveform switching indication information, the terminal calculates the PH indication information of the post-switching waveform according to the current (pre-switching) waveform and the pre-switching PH. It is to be noted that the terminal has data transmission before the waveform switching, that is, the terminal reports data to the network using the pre-switching waveform. If no actual data transmission occurs before switching, the terminal does not calculate the PH and the PH indication information. The terminal calculates the post-switching maximum transmit power according to the pre-switching waveform parameters. If the post-switching waveform does not support some pre-switching waveform parameters, the terminal does not calculate the post-switching maximum transmit power. When the terminal receives the waveform switching command, the terminal may simultaneously calculate the maximum transmit power and PH after switching. A time difference exists between the time when the terminal receives the waveform switching command and the time when the terminal actually performs waveform switching, that is, the terminal receives the waveform switching command at t1, the terminal starts to calculate the PH and the maximum transmit power, the actual waveform switching occurs at t2 (t2 > t1), and the terminal reports the PH and indication information at t3 (t3 > t2).

In S303, the terminal sends an uplink signal; correspondingly, the base station receives the uplink signal.

The uplink signal may include a reference signal, such as the SRS, and may further include a data channel, such as the PUSCH. It is to be noted that the waveform of the uplink signal in S303 is the post-switching uplink waveform. For example, it is assumed that the uplink signal is a reference signal, and the reference signal may include an SRS, a demodulation reference signal (DMRS), and the like. Then, the waveform of the reference signal may be understood as the sequence type used by the reference signal, such as low PAPR sequence type I, low PAPR sequence type II, the Zadoff-Chu (ZC) sequence, the m sequence, and the gold sequence. The PAPRs of different sequences are different. For example, assuming that the uplink signal includes the data channel, then the waveform of the data channel may be the CP-OFDM waveform or the DFT-s-OFDM waveform shown above. The uplink signal carries the PH and the PH indication information. Referring to FIG. 6, the PH and the PH indication information may be reported through the MAC CE. The PH here is the PH of the pre-switching waveform, and the PH indication information is the information of the post-switching waveform and includes the maximum transmit power.

In S304, the base station performs power control according to the received information.

Specifically, the base station may determine the PH according to the PH information carried in the uplink signal in S302. Optionally, the base station may perform uplink transmission power control on the terminal based on the PH.

Based on the preceding embodiment of the present application, according to S301, the method for the terminal to determine the PH and the PH indication information is described in detail.

The terminal determines the PH indication information according to the pre-switching uplink waveform and the post-switching waveform. The PH indication information includes the post-switching maximum transmit power.

The terminal may determine the post-switching maximum transmit power by using formula (3) and formula (4) according to the MPR corresponding to the post-switching uplink waveform, such as the MPR in Table 1 or Table 2. Other parameters in formula (3) and formula (4) are determined through the pre-switching waveform. In S303, the uplink signal may carry the PH indication information.

For example, referring to FIG. 7, the terminal receives the first information at t1. The first information indicates waveform switching, that is, the terminal may use a waveform different from the current waveform to send the uplink signal.

For example, the terminal may use the post-switching waveform to send the uplink signal after the first information takes effect, that is, after t2. It is assumed that the terminal calculates the PH and the PH indication information after t1 and before t2 and sends the PH and indication information at t3. According to the preceding method, the terminal may calculate the post-switching maximum transmit power according to the MPR corresponding to the post-switching uplink waveform, and other parameters are determined through the pre-switching waveform. Then, the terminal may determine the second PH according to the second maximum transmit power. In this manner, the terminal may send the uplink signal, such as the PUSCH, at t4, and the uplink signal may carry the second PH.

In some embodiments of the present application, the second information received by the terminal may be used to trigger the PHR. For example, the second information is used to indicate the DFT-s-OFDM waveform. Before the second information takes effect, the terminal performs uplink data transmission using the CP-OFDM waveform. For another example, the second information is used to indicate the CP-OFDM waveform. Before the second information takes effect, the terminal performs uplink data transmission using the DFT-s-OFDM waveform. The terminal determines the MPR according to the waveform indicated by the second information and then determines the maximum transmit power so that the terminal can determine the PHR and report the PHR to the network device. As another possible implementation manner, the second information received by the terminal may be used to trigger the PHR. The second information is used to indicate waveform switching. The second information is the DCI or the MAC CE. The terminal determines the MPR according to the waveform indicated by the second information and then determines the maximum transmit power so that the terminal can determine the PHR and report the PHR to the network device.

Optionally, when the sequence type adopted by the reference signal, that is, the uplink waveform, is a dynamic indication, the PHR corresponding to the first sequence needs to be reported. For example, if the base station indicates through the first information that the SRS sequence is low PAPR sequence type I at t1, the terminal may use low PAPR sequence type I to send the SRS. At t2 after t1, the base station indicates through the second information that the SRS sequence is the m sequence. Assuming that the terminal determines that the PHR trigger condition is satisfied at t3 after t2, when reporting the PHR, according to the second sequence (the m sequence), the terminal may calculate the maximum transmit power and the PHR and report the PHR to the base station.

Based on the preceding solution, when waveform switching occurs, the terminal may determine the PH according to the second uplink waveform, that is, the post-switching waveform and report the PH. In this manner, the maximum transmit power adopted by the PH sent by the terminal may be aligned with that of the base station and is the maximum transmit power determined through the MPR corresponding to the second uplink waveform. In this manner, the base station may perform uplink power control on the terminal according to the PH sent by the terminal, thereby improving the utilization rate of uplink power domain resources.

The terminal determines the PH according to the pre-switching uplink waveform.

The terminal may determine the first maximum transmit power according to the MPR corresponding to the first uplink waveform and determine the first PH according to formula (1) and the first maximum transmit power. In S202, the uplink signal may carry the first PH.

For example, as shown in FIG. 7, the terminal receives the first information at t1. The first information indicates the CP-OFDM waveform, that is, the terminal may use the CP-OFDM waveform to send the uplink signal. At t2, the terminal receives the second information. The second information indicates the DFT-s-OFDM waveform, that is, the terminal may use the DFT-s-OFDM waveform to send the uplink signal. For example, the terminal may use the DFT-s-OFDM waveform to send the uplink signal after the second information takes effect, that is, after t3. It is assumed that after t2 and before t3, according to the PHR trigger condition, the terminal determines that the PH needs to be calculated and sends the PHR at t4. According to the preceding method, the terminal may calculate the first maximum transmit power according to the MPR corresponding to the first uplink waveform, such as the CP-OFDM waveform. Then, the terminal may determine the first PH according to the first maximum transmit power. In this manner, the terminal may send the uplink signal, such as the PUSCH, at t4, and the uplink signal may carry the first PH.

Optionally, when the sequence type adopted by the reference signal, that is, the uplink waveform, is a dynamic indication, the PHR corresponding to the first sequence needs to be reported. For example, at t1, the base station indicates through the first information that the SRS sequence is low PAPR sequence type I. Then, the terminal may adopt low PAPR sequence type I to send the SRS. At t2 after t1, the base station indicates through the second information that the SRS sequence is the m sequence. Assuming that the terminal determines that the PHR trigger condition is satisfied at t3 after t2, when reporting the PHR, according to the first sequence (the low PAPR sequence type I), the terminal may calculate the maximum transmit power and the PHR and report the PHR to the base station.

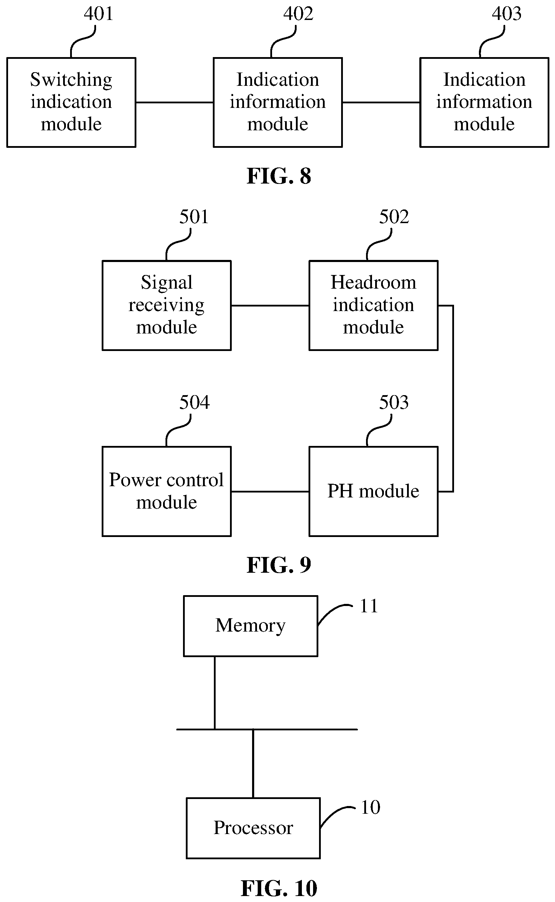

FIG. 8 is a diagram illustrating the structure of an apparatus for reporting PH indication information according to an embodiment of the present application. The apparatus may perform the method for reporting PH indication information according to any embodiment of the present application and has function modules and beneficial effects corresponding to the performed method. The apparatus may be implemented by software and/or hardware. As shown in FIG. 8, the apparatus provided in the embodiment of the present application includes a switching indication module 401, an indication information module 402, and an indication reporting module 403.

The switching indication module 401 is configured to receive uplink waveform switching indication information for a BWP.

The indication information module 402 is configured to determine PH indication information of a post-switching uplink waveform according to a waveform parameter of a pre-switching uplink waveform, where the pre-switching uplink waveform is different from the post-switching uplink waveform.

The indication reporting module 403 is configured to report the PH indication information via the post-switching uplink waveform using a MAC CE.

In some embodiments of the present application, in the apparatus, the PH indication information includes the maximum transmit power, and the maximum transmit power includes the maximum transmit power of the post-switching uplink waveform.

In some embodiments of the present application, in the apparatus, the maximum transmit power is determined according to the parameter of the pre-switching uplink waveform, the parameter includes at least the MPR, and the PH indication information further includes PH of the pre-switching uplink waveform.

In some embodiments of the present application, in the apparatus, the PH of the pre-switching uplink waveform is reported periodically and triggered according to a predefined event.

In some embodiments of the present application, in the apparatus, the maximum transmit power $P_{CMAX,f,c(i)}$ is the maximum transmit power configured at a PUSCH transmission opportunity i on a carrier f of a serving cell c, and a value of the maximum transmit power $P_{CMAX,f,c(i)}$ satisfies the following formula:

$$P_{CMAX\_L,f,c} \leq P_{CMAX,f,c} \leq P_{CMAX\_H,f,c}.$$

$P_{CMAX\_L,f,c}$ satisfies the formula below.

$$P_{CMAX\_L,f,c} = MIN \{P_{EMAX,c} - \Delta T_{C,c,} (P_{PowerClass} - \Delta P_{PowerClass}) - MAX(MAX(MPRc, A\text{-}MPRc) + \Delta T_{IB,c} + \Delta T_{C,c} + \Delta T_{RxSRS}, P\text{-}MPRc)\}).$$

$P_{CMAX\_H,f,c}$ satisfies the formula below.

$$P_{CMAX\_H,f,c} = MIN \{P_{EMAX,c}, P_{PowerClass} - \Delta P_{PowerClass}\}.$$

$P_{EMAX,c}$ denotes a value of an information element p-MAX in RRC signaling in the serving cell; $P_{PowerClass}$ denotes the maximum terminal power of a terminal device at one of the different power classes; for a terminal at an enabling power class 2, $\Delta P_{PowerClass}$ = 3dB, or for a terminal at another enabling power class, $\Delta P_{PowerClass}$ = 0; $\Delta T_{IB,c}$ denotes the additional tolerance for the serving cell c, and $\Delta T_{C,c}$ denotes a predefined value which is 1.5 dB or 0; MPRc denotes the MPR for the serving cell c, and A-MPRc denotes the additional maximum power reduction; $\Delta T_{RxSRS}$ denotes an application indication related to the configuration of an uplink SRS port and an antenna; and P-MPRc denotes the maximum power reduction set in accordance with regulatory requirements.

In some embodiments of the present application, the apparatus further includes a PH module configured to determine the PH according to the pre-switching uplink waveform, where the PH refers to the remaining power after the terminal device completes the current transmission.

In some embodiments of the present application, in the apparatus, the pre-switching uplink waveform includes a DFT-s-OFDM waveform, and the post-switching uplink waveform includes a CP-OFDM waveform; or the pre-switching uplink waveform includes the CP-OFDM waveform, and the post-switching uplink waveform includes the DFT-s-OFDM waveform.

In some embodiments of the present application, the apparatus further includes a second signaling module configured to receive second RRC signaling, where the second RRC signaling instructs the terminal device to report PH indication information of the post-switching uplink waveform.

In some embodiments of the present application, the apparatus further includes an information receiving module configured to receive the first DCI or the MAC CE, where the first DCI or the MAC CE includes the uplink waveform switching indication information.

In some embodiments of the present application, the apparatus further includes a capability information module configured to send capability information, where the capability information includes at least an indication that DCI is supported to include the uplink waveform switching indication information or an indication that the MAC CE is supported to include the uplink waveform switching indication information.

In some embodiments of the present application, the apparatus further includes another processing module configured to perform at least one of the following: in response to the pre-switching uplink waveform including no uplink data transmission, not reporting the PH indication information; or in response to the waveform parameter of the pre-switching uplink waveform being not suitable for the PH indication information of the post-switching uplink waveform, not reporting the PH indication information.

In some embodiments of the present application, in the apparatus, an indication manner of the maximum transmit power of the PH indication information includes at least one of the following: a power value indication; an indication of a difference from an actual power value; an index indication of power or a power difference; or an indication by the MAC CE via an LCID corresponding to the PH indication information.

FIG. 9 is a diagram illustrating the structure of another apparatus for reporting PH indication information according to an embodiment of the present application. The apparatus may perform the method for reporting PH indication information according to any embodiment of the present application and has function modules and beneficial effects corresponding to the performed method. The apparatus may be implemented by software and/or hardware. As shown in FIG. 9, the apparatus provided in the embodiment of the present application includes a signal receiving module 501, a headroom indication module 502, and a power control module 503.

The signal receiving module 501 is configured to receive an uplink signal, where a waveform of the uplink signal is a post-switching uplink waveform.

The headroom indication module 502 is configured to determine PH indication information of the post-switching uplink waveform carried in the uplink signal.

The power control module 503 is configured to perform uplink power control on a terminal device according to the PH indication information.

Based on the preceding embodiment of the present application, in the apparatus, the PH indication information indicates the maximum transmit power of the post-switching uplink waveform, and the PH indication information further includes PH of a pre-switching uplink waveform.

Based on the preceding embodiment of the present application, in the apparatus, the maximum transmit power is determined according to the maximum power reduction of the pre-switching uplink waveform.

Based on the preceding embodiment of the present application, in the apparatus, PH is determined according to the maximum transmit power of a pre-switching uplink waveform.

Based on the preceding embodiment of the present application, the apparatus further includes a first information sending module configured to send first RRC signaling, where the first RRC signaling indicates whether DCI or a MAC CE includes uplink waveform switching indication information.

Based on the preceding embodiment of the present application, the apparatus further includes a capability receiving module configured to receive capability information, where the capability information includes at least an indication that the terminal device supports DCI to include uplink waveform switching indication information or an indication that the terminal device supports the MAC CE to include the uplink waveform switching indication information.

FIG. 10 is a diagram illustrating the structure of an electronic device according to an embodiment of the present application. The electronic device includes a processor 10 and a memory 11. One or more processors 10 may be provided in the electronic device, and one processor 10 is used as an example in FIG. 10. The processor 10 and the memory 11 in the electronic device may be connected via a bus or in other manners. In FIG. 10, the connection via a bus is used as an example.

As a computer-readable storage medium, the memory 11 may be configured to store software programs, computer-executable programs, and modules, for example, modules (the switching indication module 401, the indication information module 402, and the indication reporting module 403 or the signal receiving module 501, the headroom indication module 502, and the power control module 503) corresponding to the apparatus in the embodiment of the present application. The processor 10 executes the software programs, instructions, and modules stored in the memory 11 to perform function applications and data processing of the electronic device, that is, to perform the preceding method.

The memory 11 may mainly include a program storage region and a data storage region. The program storage region may store an operating system and an application program required by at least one function. The data storage region may store data created according to the use of the electronic device. Additionally, the memory 11 may include a high-speed random-access memory and may also include a nonvolatile memory such as at least one disk memory, a flash memory, or another nonvolatile solid-state memory. In some examples, the memory 11 may also be a memory remote from the processor 10 and connectable to the electronic device via a network. Examples of the network include, but are not limited to, the Internet, an intranet, a local area network, a mobile communication network, and a combination thereof.

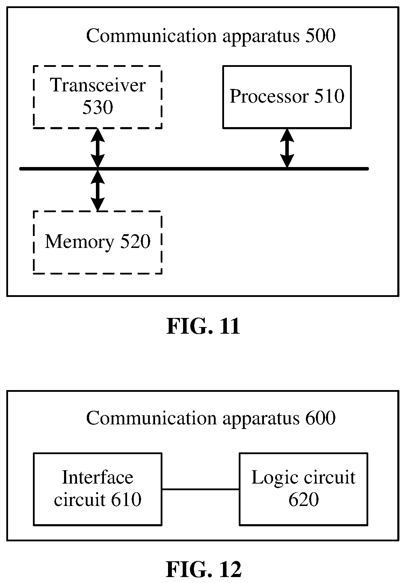

FIG. 11 is a diagram illustrating the structure of a communication apparatus according to an embodiment of the present application. Referring to FIG. 11, the communication apparatus may include a processor 510, a memory 520, and a transceiver 530 that are connected via a bus. The processor 510 executes software programs, instructions, and modules stored in the memory 520 to perform function applications and data processing of the electronic device, that is, to perform the preceding method. The memory 520 may mainly include a program storage region and a data storage region. The program storage region may store an operating system and an application program required by at least one function. The data storage region may store data created according to the use of the communication apparatus. The transceiver 530 may perform communication and exchange with other communication apparatuses or base stations through wireless signals to achieve data exchange between different electronic devices.

For example, a communication apparatus 500 may be a chip or a chip system. Optionally, in the embodiment of the present application, the chip system may be formed by chips or may include chips and other discrete devices. The communication apparatus 500 may include at least one processor 510. The communication apparatus 500 may also include at least one memory 520 for storing computer programs, program instructions, and/or data. The memory 520 is coupled to the processor 510. The coupling in the embodiment of the present application is the indirect coupling or communication connection between apparatuses, units, or modules, may be electrical, mechanical, or in other forms, and is used for information exchange between apparatuses, units, or modules. The processor 510 may operate in conjunction with the memory 520. The processor 510 may execute the computer programs stored in the memory 520. Optionally, the at least one memory 520 may be integrated with the processor 510.

Optionally, in actual applications, the communication apparatus 500 may include the transceiver 530 or may not include the transceiver 530 and the memory 520 that are illustrated by dashed boxes in the figure. The communication apparatus 500 may exchange information with other devices through the transceiver 530. The transceiver 530 may be a circuit, a bus, a transceiver, or any other apparatus that can be used for information exchange.

In a possible embodiment, the communication apparatus 500 may be applied to the preceding terminal device or may be the preceding network device. The memory 520 stores necessary computer programs, program instructions, and/or data for performing the method for reporting PH indication information in any of the preceding embodiments. The processor 510 may execute the computer programs stored in the memory 520 to complete the method in any of the preceding embodiments.

The specific connection medium between the transceiver 530, the processor 510, and the memory 520 is not limited in the embodiment of the present application. In the embodiment of the present application, the memory 520, the processor 510, and the transceiver 530 are connected via a bus in FIG. 11. The bus is represented by a thick line in FIG. 11. The connection manners between other components are merely for schematic illustration and are not intended to be limiting. The bus may be divided into an address bus, a data bus, a control bus, and the like. For ease of representation, FIG. 11 shows only one thick line, but this does not mean that only one bus or only one type of bus exists. In the embodiment of the present application, the processor may be a general-purpose processor, a digital signal processor, an application-specific integrated circuit, a field-programmable gate array or any other programmable logic device, a discrete gate or transistor logic device, or a discrete hardware component and may perform or execute the methods, steps, and logic block diagrams disclosed in the embodiments of the present application. The general-purpose processor may be a microprocessor or any conventional processor. The steps of the method disclosed in the embodiments of the present application may be implemented by a hardware processor or may be implemented by a combination of hardware and software modules in the processor.

In the embodiment of the present application, the memory may be a non-volatile memory, such as a hard disk drive (HDD) or a solid-state drive (SSD), or a volatile memory, such as a random-access memory (RAM). The memory may also be, but is not limited to, any other medium that can be used to carry or store desired program codes in the form of instructions or data structures and can be accessed by the computer. The memory in the embodiment of the present application may also be a circuit or any other apparatus capable of implementing a storage function and is used to store computer programs, program instructions, and/or data.

FIG. 12 is a diagram illustrating the structure of another communication apparatus according to an embodiment of the present application. Referring to FIG. 12, the embodiment of the present application further provides another communication apparatus 600. The communication apparatus 600 includes an interface circuit 610 and a logic circuit 620. The interface circuit 610 may be understood as an input and output interface which may be used to perform the same operating steps as the transceiver shown in FIG. 11 above, and the details are not repeated here in the present application. The logic circuit 620 may be used to execute the code instructions to perform the method in any of the preceding embodiments, may be understood as the processor in FIG. 11, and may implement the same functions as the processing unit or the processor, and the details are not repeated in the present application.

Based on the preceding embodiments, the embodiment of the present application further provides a readable storage medium which stores instructions. When the instructions are executed, the method for reporting PH indication information in any of the preceding embodiments is performed. The readable storage medium may include a universal serial bus (USB) flash disk, a mobile hard disk, a read-only memory (ROM), a random-access memory (RAM), a magnetic disk, an optical disc, or another medium capable of storing program codes.

It is to be understood by those skilled in the art that the embodiments of the present application may be provided as methods, systems, and computer program products. Therefore, the present application may adopt hardware embodiments, software embodiments, or a combination of hardware and software embodiments. Moreover, the present application may adopt a computer program product implemented on one or more computer-usable storage media (including, but not limited to, a magnetic disk memory, a portable compact disc read-only memory (CD-ROM), an optical memory, and the like) including computer-usable program codes. The present application is described with reference to the flowcharts and/or block diagrams of the method, apparatus (system), and computer program product according to the present application. It is to be understood that each flow and/or block in the flowcharts and/or block diagrams and a combination of flows and/or blocks in the flowcharts and/or block diagrams may be implemented using computer program instructions. These computer program instructions may be provided for a processor of a general-purpose computer, a special-purpose computer, an embedded processor, or another programmable data processing apparatus to produce a machine so that instructions, which are executed via the processor of the computer or another programmable data processing apparatus, produce an apparatus for implementing the functions designated in one or more flows in the flowcharts and/or one or more blocks in the block diagrams.

These computer program instructions may be stored in a computer-readable memory that can guide a computer or another programmable data processing apparatus to work in a specific manner so that the instructions stored in the computer-readable memory produce a manufactured product including an instruction apparatus, and the instruction apparatus implements the functions designated in one or more flows in the flowcharts and/or one or more blocks in the block diagrams. These computer program instructions may be loaded onto a computer or another programmable data processing apparatus so that a series of operating steps are executed on the computer or another programmable apparatus to produce computer-implemented processing, and the instructions executed on the computer or another programmable apparatus provide steps for implementing the functions designated in one or more flows in the flowcharts and/or one or more blocks in the block diagrams.

An embodiment of the present application further provides a storage medium including computer-executable instructions, and when executed by a computer processor, the computer-executable instructions are configured to cause the computer processor to perform a method for reporting PH indication information. The method includes the following: Uplink waveform switching indication information for a BWP is received.

PH indication information of a post-switching uplink waveform is determined according to a waveform parameter of a pre-switching uplink waveform, where the pre-switching uplink waveform is different from the post-switching uplink waveform.

The PH indication information is reported via the post-switching uplink waveform using a MAC CE.

Alternatively, when executed by the computer processor, the computer-executable instructions are configured to cause the computer processor to perform a method for reporting PH indication information. The method further includes the following:
An uplink signal is received, where a waveform of the uplink signal is a post-switching uplink waveform.

PH indication information of the post-switching uplink waveform carried in the uplink signal is determined.

Uplink power control is performed on a terminal device according to the PH indication information.

From the preceding description of embodiments, it is apparent to those skilled in the art that the present application may be implemented by software and necessary general-purpose hardware or may be implemented by hardware, but the former is a preferred implementation in many cases. Based on this understanding, the technical solutions of the present application substantially, or the part contributing to the existing art, may be embodied in the form of a software product. The computer software product may be stored in a computer-readable storage medium such as a floppy disk, a read-only memory (ROM), a random-access memory (RAM), a flash memory, a hard disk, or an optical disc of a computer and includes several instructions for causing a computer device (which may be a personal computer, a server, a network device, or the like) to perform the methods in the embodiments of the present application.

It is to be noted that units and modules included in the preceding embodiment of the apparatus are divided according to functional logic, and the division is not limited to this as long as the corresponding functions can be implemented. Additionally, the specific names of function units are used to distinguish between each other and are not to limit the scope of the present application.

It is to be understood by those of ordinary skill in the art that some or all steps of the preceding method and function modules/units in the preceding apparatus or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory or other memory technologies, a compact disc read-only memory (CD-ROM), a digital video disc (DVD) or other optical storages, a magnetic cassette, a magnetic tape, a magnetic disk or other magnetic storage devices, or any other medium that is used to store desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

**Claims**

1. A method for reporting power headroom, PH, indication information, the method being applied to a terminal device and comprising:

   receiving uplink waveform switching indication information for a bandwidth part, BWP;
   determining PH indication information of a post-switching uplink waveform according to a waveform parameter of a pre-switching uplink waveform, wherein the pre-switching uplink waveform is different from the post-switching uplink waveform; and
   reporting the PH indication information via the post-switching uplink waveform using a medium access control control element, MAC CE.

2. The method of claim 1, wherein the PH indication information comprises maximum transmit power, and the maximum transmit power comprises maximum transmit power of the post-switching uplink waveform.

3. The method of claim 2, wherein the maximum transmit power is determined according to the waveform parameter of the pre-switching uplink waveform, the waveform parameter comprises maximum power reduction, MPR, and the PH indication information further comprises PH of the pre-switching uplink waveform.

4. The method of claim 3, wherein the PH of the pre-switching uplink waveform is reported periodically and triggered according to a predefined event.

5. The method of claim 2, wherein the maximum transmit power $P_{CMAX,f,c(i)}$ is maximum transmit power configured at a Physical Uplink Shared Channel, PUSCH, transmission opportunity i on a carrier f of a serving cell c and satisfies the following formula:

$$P_{CMAX\_L,f,c} \leq P_{CMAX,f,c} \leq P_{CMAX\_H,f,c};$$

   wherein $P_{CMAX\_L,f,c}$ satisfies the following formula:

   $P_{CMAX\_L,f,c} = MIN \{P_{EMAX,c} - \Delta T_{C,c}, (P_{PowerClass} - \Delta P_{PowerClass}) - MAX(MAX(MPRc, A\text{-}MPRc) + \Delta T_{IB,c} + \Delta T_{C,c} + \Delta T_{RxSRS}, P\text{-}MPRc)\});$

   wherein $P_{CMAX\_H,f,c}$ satisfies the following formula:

$$P_{CMAX\_H,f,c} = MIN \{P_{EMAX,c}, P_{PowerClass} - \Delta P_{PowerClass}\};$$

   wherein $P_{EMAX,c}$ denotes a value of an information element p-MAX in radio resource control, RRC, signaling in the serving cell; $P_{PowerClass}$ denotes maximum terminal power of the terminal device at one of different enabling power classes; for the terminal device at an enabling power class 2, $\Delta P_{PowerClass} = 3dB$, or for the terminal at another enabling power class, $\Delta P_{PowerClass} = 0$; $\Delta T_{IB,c}$ denotes additional tolerance for the serving cell c, and $\Delta T_{C,c}$ denotes a predefined value which is 1.5 dB or 0; MPRc denotes MPR for the serving cell c, and A-MPRc denotes additional maximum output power reduction; $\Delta T_{RxSRS}$ denotes an application indication related to configuration of an uplink Sounding Reference Signal, SRS, port and an antenna; and P-MPRc denotes maximum output power reduction set in accordance with regulatory requirements.

6. The method of claim 3, further comprising: determining the PH according to the pre-switching uplink waveform, wherein the PH refers to remaining power after the terminal device completes current transmission.

7. The method of claim 1, wherein,

the pre-switching uplink waveform comprises a discrete Fourier transform spread orthogonal frequency-division multiplexing, DFT-s-OFDM, waveform, and the post-switching uplink waveform comprises a cyclic prefix-orthogonal frequency-division multiplexing, CP-OFDM, waveform; or
the pre-switching uplink waveform comprises the CP-OFDM waveform, and the post-switching uplink waveform comprises the DFT-s-OFDM waveform.

8. The method of claim 1, wherein the uplink waveform switching indication information is carried in at least one of the following: downlink control information, DCI, or the MAC CE.

9. The method of claim 1, further comprising:

receiving RRC signaling indicating whether DCI or the MAC CE comprises the uplink waveform switching indication information, and
performing an operation according to the uplink waveform switching indication information in response to the DCI or the MAC CE comprising the uplink waveform switching indication information.

10. The method of claim 1, further comprising:
receiving second RRC signaling instructing the terminal device to report the PH indication information of the post-switching uplink waveform.

11. The method of claim 1, further comprising:
receiving first DCI or the MAC CE, wherein the first DCI or the MAC CE comprises the uplink waveform switching indication information.

12. The method of claim 1, further comprising:
sending capability information comprising at least one of an indication that DCI is supported to comprise the uplink waveform switching indication information or an indication that the MAC CE is supported to comprise the uplink waveform switching indication information.

13. The method of claim 1, further comprising at least one of the following:

in response to the pre-switching uplink waveform comprising no uplink data transmission, not reporting the PH indication information; or
in response to the waveform parameter of the pre-switching uplink waveform being not suitable for the PH indication information of the post-switching uplink waveform, not reporting the PH indication information.

14. The method of claim 1, wherein an indication manner of maximum transmit power of the PH indication information comprises at least one of the following:

a power value indication;
an indication of a difference from an actual power value;
an index indication of power or a power difference; or
an indication by the MAC CE via a logical channel identifier, LCID, corresponding to the PH indication information.

15. A method for reporting power headroom, PH, indication information, the method being applied to a network device and comprising:

receiving an uplink signal, wherein a waveform of the uplink signal is a post-switching uplink waveform;
determining PH indication information of the post-switching uplink waveform carried in the uplink signal; and
performing uplink power control on a terminal device according to the PH indication information.

16. The method of claim 15, wherein the PH indication information indicates maximum transmit power of the post-switching uplink waveform, and the PH indication information further comprises PH of a pre-switching uplink waveform.

17. The method of claim 16, wherein the maximum transmit power is determined according to maximum output power reduction of the pre-switching uplink waveform.

18. The method of claim 15, wherein the PH is determined according to maximum transmit power of a pre-switching uplink waveform.

19. The method of claim 15, further comprising:
sending first radio resource control, RRC, signaling indicating whether downlink control information, DCI, or a medium access control control element, MAC CE, comprises uplink waveform switching indication information.

20. The method of claim 15, further comprising:
receiving capability information comprising at least one of an indication that the terminal device supports DCI to comprise uplink waveform switching indication information or an indication that the terminal device supports the MAC CE to comprise the uplink waveform switching indication information.

21. An electronic device, comprising:

at least one processor; and
a memory configured to store at least one program;
wherein when executed by the at least one processor, the at least one program causes the at least one processor to perform the method for reporting PH indication information of any one of claims 1 to 20.

22. A computer-readable storage medium storing at least one program which, when executed by at least one processor, causes the at least one processor to perform the method for reporting PH indication information of any one of claims 1 to 20.

**FIG. 1**

| | |
|---|---|
| Receive uplink waveform switching indication information for a BWP | 110 |
| Determine PH indication information of a post-switching uplink waveform according to a waveform parameter of a pre-switching uplink waveform | 120 |
| Report the PH indication information via the post-switching uplink waveform using a MAC CE | 130 |

**FIG. 2**

Receive an uplink signal, where a waveform of the uplink signal is a post-switching uplink waveform ⌇210

Determine PH indication information of the post-switching uplink waveform carried in the uplink signal ⌇220

Perform uplink power control on a terminal device according to the PH indication information ⌇230

**FIG. 3**

Start

Receive the signal

Does the RRC indicate the PHR?

Yes → Does the RRC indicate enabling waveform switching?

Yes ↓

Is the waveform the DFT-s-OFDM waveform?

No → Report information on the CP-OFDM waveform

Yes ↓

Report information on the DFT-s-OFDM waveform

No

No

Stop

**FIG. 4**

**FIG. 5**

| P | P | Pre-switching PH (type 1) |
|---|---|---|
| P | | Post-switching maximum transmit power $P_{CMAX,f,c}$ |

**FIG. 6**

**FIG. 7**

401

Switching indication module

402

Indication information module

403

Indication information module

**FIG. 8**

501

Signal receiving module

502

Headroom indication module

504

Power control module

503

PH module

**FIG. 9**

Memory — 11

Processor — 10

**FIG. 10**

Communication apparatus 500

Transceiver
530

Processor 510

Memory 520

**FIG. 11**

Communication apparatus 600

Interface
circuit 610

Logic circuit
620

**FIG. 12**

## INTERNATIONAL SEARCH REPORT

| International application No. |
| --- |
| **PCT/CN2024/090496** |

| A. | CLASSIFICATION OF SUBJECT MATTER |
| --- | --- |

H04W 52/36(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

VEN; WPABS; CNTXT; USTXT; EPTXT; CNABS; 3GPP: 功率余量, 波形, 切换, 指示, PH, waveform, switch, indicate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116506930 A (HUAWEI TECHNOLOGIES CO., LTD.) 28 July 2023 (2023-07-28) claims 1-26, and description, paragraphs 92-176 | 1-22 |
| X | CN 116709491 A (HUAWEI TECHNOLOGIES CO., LTD.) 05 September 2023 (2023-09-05) claims 1-23, and description, paragraphs 89-178 | 1-22 |
| A | US 2020288412 A1 (CONVIDA WIRELESS L.L.C.) 10 September 2020 (2020-09-10) entire document | 1-22 |
| A | US 2022376965 A1 (TELEFONAKTIEBOLAGET LM ERICSSON (PUBL)) 24 November 2022 (2022-11-24) entire document | 1-22 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 June 2024** | **14 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 116506930 | A | 28 July 2023 | None | | | |
| CN | 116709491 | A | 05 September 2023 | None | | | |
| US | 2020288412 | A1 | 10 September 2020 | WO | 2019099634 | A1 | 23 May 2019 |
| | | | | EP | 3698582 | A1 | 26 August 2020 |
| | | | | EP | 3698582 | B1 | 14 September 2022 |
| | | | | EP | 4156801 | A1 | 29 March 2023 |
| US | 2022376965 | A1 | 24 November 2022 | EP | 4029173 | A1 | 20 July 2022 |
| | | | | WO | 2021047973 | A1 | 18 March 2021 |

Form PCT/ISA/210 (patent family annex) (July 2022)